# EUROPÄISCHE PATENTSCHRIFT

(11) **EP 2 714 942 B1**
(45) Veröffentlichungstag und Bekanntmachung des Hinweises auf die Patenterteilung: **18.03.2015**
(21) Anmeldenummer: 12722096.0
(22) Anmeldetag: 07.05.2012
(51) Int. Cl.: C21B 5/06, C21B 13/00

(54) **REDUKTION VON METALLOXIDEN UNTER VERWENDUNG EINES SOWOHL KOHLENWASSERSTOFF ALS AUCH WASSERSTOFF ENTHALTENDEN GASSTROMES**
REDUCTION OF METAL OXIDES USING A GAS STREAM CONTAINING BOTH HYDROCARBON AND HYDROGEN
RÉDUCTION D'OXYDES MÉTALLIQUES À L'AIDE D'UN FLUX DE GAZ CONTENANT UN HYDROCARBURE ET DE L'HYDROGÈNE

(30) Priorität: 30.05.2011 AT 7852011
(43) Veröffentlichungstag der Anmeldung: 09.04.2014
(73) Patentinhaber: Siemens VAI Metals Technologies GmbH, 4031 Linz (AT)
(72) Erfinder: MILLNER, Robert, A-3382 Loosdorf (AT); BOEHM, Christian, A-4600 Thalheim (AT)
(74) Vertreter: Maier, Daniel Oliver
(86) Internationale Anmeldenummer: PCT/EP2012/058360
(87) Internationale Veröffentlichungsnummer: WO 2012/163628

(56) Entgegenhaltungen:
- WO-A1-99/42624
- WO-A2-2011/012964

## Beschreibung

### Gebiet der Technik

Die vorliegende Erfindung betrifft ein Verfahren zur Reduktion von Metalloxiden, bevorzugt von Eisenoxiden, unter Verwendung eines sowohl Kohlenwasserstoff als auch Wasserstoff enthaltenden Gasstromes. Sie betrifft auch eine Vorrichtung zur Durchführung eines solchen Verfahrens.

### Stand der Technik

Koksofengas fällt bei der Erzeugung von Koks in integrierten Hüttenwerken oder Stand-alone Produktionsanlagen an und wird bisher beispielsweise zur Stützung des Heizwertes der Hochofen-Gichtgase vor deren Nutzung in Winderhitzern, als Brenngas in Brammenstoss- oder Rollenherdöfen, und zur Stromerzeugung in Kraftwerken verwendet. Es enthält als Hauptbestandteile sowohl Kohlenwasserstoff - beispielsweise einen oder mehrere Kohlenwasserstoffe CₙH₂ₙ₊₂, wobei n = 1 oder 2 oder 3 oder 4 sein kann; hauptsächlich jedoch Methan, also n=1 - als auch Wasserstoff. In manchen integrierten Hüttenwerken wird Koksofengas auch zur Erzeugung von technisch reinem Wasserstoff, beispielweise für die Nutzung in Glühöfen, verwendet. Typische anfallende Zusammensetzungen von Koksofengas in integrierten Hüttenwerken sind wie folgt

| KOG Analyse (trocken): | | | |
|---|---|---|---|
| H₂ | [vol%] | 65 | 62,1 |
| N₂ | [vol%] | 2,5 | inkl. in Rest |
| CO | [vol%] | 6 | 6,2 |
| CH₄ | [vol%] | 22 | 21,4 |
| CₙHₘ | [vol%] | 3 | inkl. in Rest |
| CO₂ | [vol%] | 1,5 | inkl. in Rest |
| H₂O | [vol%] | gesättigt | inkl. in Rest |
| H₂S | [g/Nm³] | 0,35 | n.a. |
| Teer | [g/Nm³] | 5 | n.a. |
| Staub | [g/Nm³] | 5 | n.a. |
| Rest | [vol%] | - | 10,3 |

Das Koksofengas enthält zwar für eine Reduktion von Metalloxiden im Allgemeinen und Eisenoxiden im Speziellen gut nutzbare Komponenten wie Wasserstoff und Kohlenmonoxid, kann jedoch aufgrund des Kohlenwasserstoff-Gehaltes nur beschränkt zur Reduktion von Metalloxiden, speziell Eisenoxiden, in einem Reduktionsaggregat eingesetzt werden, da infolge von bei Einleitung von Koksofengas in das Reduktionsaggregat ablaufenden stark endothermen Reaktionen der Kohlenwasserstoffe.
beispielsweise Kohlenwasserstoff CH₄

| | | |
|---|---|---|
| CH₄ → 2 H₂ + C | Cracking | Δ H₂₉₈ = +74,86 [kJ/mol] |
| 3 Fe + CH₄ → Fe₃C + 2 H₂ | Aufkohlung | Δ H₂₉₈ = + 99,7 [kJ/mol] |

die Reduktionstemperatur zu stark absinken würde, was wiederum die Produktivität des Reduktionsaggregates stark einschränken würde.

Deswegen wird im Reduktionsverfahren wenig Koksofengas eingesetzt. W2011/012964 offenbart beispielsweise eine komplette Gasnachbehandlung für Direktreduktionsanlagen, wobei kein Koksofengas eingesetzt wird.

### Zusammenfassung der Erfindung

### Technische Aufgabe

Es ist eine Aufgabe der vorliegenden Erfindung, ein Verfahren bereitzustellen, welches die Nutzung eines Kohlenwasserstoff als auch Wasserstoff enthaltenden Gasstromes zur Reduktion von Metalloxiden erlaubt. Ebenso ist es eine Aufgabe, eine Vorrichtung zur Durchführung eines solchen Verfahrens bereitzustellen.

### Technische Lösung

Diese Aufgabe wird erfindungsgemäß gelöst durch ein Verfahren zur Reduktion von Metalloxiden unter Verwendung eines sowohl Kohlenwasserstoff als auch Wasserstoff enthaltenden Gasstromes,
**welches dadurch gekennzeichnet ist, dass**
der sowohl Kohlenwasserstoff als auch Wasserstoff enthaltende Gasstrom in eine wasserstoffreiche Fraktion
und in eine Kohlenwasserstoff - reiche Fraktion
aufgetrennt wird,
und nachfolgend
zumindest eine Teilmenge der Kohlenwasserstoff - reichen Fraktion zumindest einer Operation aus der Gruppe
- Oxidation mit technisch reinem Sauerstoff,
- Reformierung mittels CO₂ und H₂O
unterworfen wird,
und dann zumindest als Bestandteil eines Reduktionsgases in ein die Metalloxide enthaltendes Reduktionsaggregat eingeleitet wird,
wobei der Kohlenwasserstoff - Gehalt durch die zumindest eine Operation aus der genannten Gruppe so eingestellt wird,
dass der Kohlenwasserstoff- Gehalt in dem Reduktionsgas bei Eintritt in das Reduktionsaggregat unter 12 Vol%, bevorzugt unter 10 Vol%, besonders bevorzugt unter 8 Vol%, beträgt.

Metalloxide können dabei beispielsweise Eisenoxide, oder Oxide von Nickel, Kupfer, Blei, Kobalt sein.

Die Reduktion der Metalloxide erfolgt bevorzugt zu weitgehend metallisiertem Metall - das heißt, dass ein Metallisierungsgrad von größer gleich 90% vorliegt, bevorzugt größer gleich 92% -, beispielsweise Eisenschwamm.

### Vorteilhafte Wirkungen der Erfindung

Der sowohl Kohlenwasserstoff als auch Wasserstoff enthaltende Gasstrom kann eine oder zwei oder mehr Arten von Kohlenwasserstoff enthalten. Beispielsweise enthält er niedere gesättigte Kohlenwasserstoffe CₙH₂ₙ₊₂, wobei gilt n=1, also Methan, oder n=2, also Ethan, oder n=3, also Propan, oder n=4, also Butan oder Isobutan. Er kann auch niedere, einfach oder mehrfach ungesättigte Kohlenwasserstoffe enthalten, wobei beispielsweise gilt CₙH₂ₙ, beispielsweise Ethen. Er kann auch aromatische Kohlenwasserstoffe enthalten wie beispielsweise Benzen oder Toluen. Im dem sowohl Kohlenwasserstoff als auch Wasserstoff enthaltenden Gasstrom können auch eine oder mehrere Arten von Kohlenwasserstoff mit der allgemeinen Formel CnHm enthalten sein, wobei m sein kann
m = n,
m = 2n,
m = 2n+2.

Erfindungsgemäß wird der sowohl Kohlenwasserstoff als auch Wasserstoff enthaltende Gasstrom in eine wasserstoffreiche Fraktion und in eine Kohlenwasserstoff - reiche Fraktion aufgetrennt. Dabei enthält die Kohlenwasserstoff - reiche Fraktion nicht nur Kohlenwasserstoffe, sondern auch noch weitere Komponenten wie Argon, Stickstoff, Kohlenmonoxid, Kohlendioxid und Wasserdampf. Die Bezeichnung Kohlenwasserstoff - reich bezieht sich darauf, dass diese Fraktion im Vergleich zum sowohl Kohlenwasserstoff als auch Wasserstoff enthaltenden Gasstrom einen höheren Gehalt an Kohlenwasserstoff aufweist.
Die wasserstoffreiche Fraktion enthält nicht nur Wasserstoff.
Die Bezeichnung wasserstoffreich bezieht sich darauf, dass diese Fraktion im Vergleich zum sowohl Kohlenwasserstoff als auch Wasserstoff enthaltenden Gasstrom einen höheren Gehalt an Wasserstoff aufweist.

Nachfolgend zur Auftrennung wird zumindest eine Teilmenge der bei der Auftrennung erhaltenen Kohlenwasserstoff - reichen Fraktion zumindest einer Operation aus der Gruppe
- Oxidation mit technisch reinem Sauerstoff,
- Reformierung mittels CO₂ und H₂O
unterworfen. Sie kann auch einer Kombination dieser beiden Operationen unterworfen werden.
Bei einer Kombination wird vorzugsweise zuerst mit technisch reinem Sauerstoff partiell oxidiert zwecks Temperaturerhöhung und anschließend mit CO₂ und H₂O reformiert, beispielsweise in einem autothermen Reformer. In einem autothermen Reformer wird keine Befeuerung des Reformers benötigt, weshalb keine Zuleitung von Brenngas zum autothermen Reformer nötig ist. Das spart baulichen Aufwand ein und reduziert die Abgase des Reformers.
Dabei wird bei der Oxidation nicht die gesamte Stoffmenge der Kohlenwasserstoffe oxidiert, sondern nur ein Teil der Stoffmenge der Kohlenwasserstoffe - das wird im Rahmen dieser Anmeldung auch als partielle Oxidation bezeichnet.
Dabei wird bei der Reformierung nicht die gesamte Stoffmenge der Kohlenwasserstoffe reformiert, sondern ein überwiegender Teil der Stoffmenge der Kohlenwasserstoffe.
Durch die genannten Operationen alleine oder in Kombination sinkt der Gehalt der Kohlenwasserstoffe.

Nachdem zumindest eine Teilmenge der bei der Auftrennung erhaltenen Kohlenwasserstoff - reichen Fraktion zumindest einer Operation aus der genannten Gruppe unterworfen wurde, wird sie zumindest als Bestandteil eines Reduktionsgases in ein die Metalloxide enthaltendes Reduktionsaggregat eingeleitet - damit ist selbstverständlich gemeint, das das bei der oder den Operationen erhaltene Produkt eingeleitet wird.
Zumindest als Bestandteil eines Reduktionsgases bedeutet, dass das Reduktionsgas auch andere Bestandteile enthalten kann, welche gegebenenfalls zugemischt werden, bevor eine bei der Zumischung erhaltene Mischung als Reduktionsgas in das Reduktionsaggregat eingeleitet wird.

Erfindungsgemäß wird der Kohlenwasserstoff - Gehalt der Teilmenge durch die zumindest eine Operation aus der genannten Gruppe so eingestellt, dass der Kohlenwasserstoff - Gehalt in dem Reduktionsgas bei Eintritt in das Reduktionsaggregat unter 12 Vol%, bevorzugt unter 10 Vol%, besonders bevorzugt unter 8 Vol%, aber über 1 Vol%, bevorzugt über 2 Vol%, besonders bevorzugt über 3 Vol% beträgt. Die genannten Grenzen sind dabei mit umfasst. Je höher der Kohlenwasserstoff - Gehalt im Reduktionsgas bei Eintritt in das Reduktionsaggregat ist, umso höher muss die Reduktionstemperatur- bei Reduktionsschächten als Reduktionsaggregat auch Bustlegastemperatur genannt - eingestellt werden, beziehungsweise umso geringer ist die Produktivität der Anlage. Bei einem erfindungsgemäß eingestellten Kohlenwasserstoff - Gehalt sinkt die Reduktionstemperatur infolge geringerer endothermer Reaktionen der Kohlenwasserstoffe nicht so stark ab, dass die Produktivität des Reduktionsaggregates unter ein wirtschaftlich akzeptables Maß hinaus abnimmt.
Die untere Grenze für den Kohlenwasserstoff - Gehalt wird beispielsweise bei der Reduktion von Eisenoxiden durch den erforderlichen Kohlenstoffgehalt-Kohlenstoff gebunden als Fe₃C oder elementarer Kohlenstoff - im reduzierten Produkt für das Stahlwerk - dort beispielsweise einen Lichtbogenofen - bestimmt. Mit steigendem Kohlenstoffgehalt im reduzierten Produkt sinkt der Energiebedarf bei der nachfolgenden Behandlung im Lichtbogenofen. Ein Kohlenwasserstoff-Gehalt in dem Reduktionsgas bei Eintritt in das Reduktionsaggregat im Bereich der Untergrenze wird beispielsweise zur Erzeugung eines Mindestgehaltes an Kohlenstoff in einem Eisenschwamm, insbesondere in Form von Fe₃C, eingesetzt, beziehungsweise ist ein solcher Kohlenwasserstoff - Gehalt gegebenenfalls zur Temperaturführung im Reduktionsaggregat erforderlich. Darüber hinaus benötigen beispielsweise bei der Herstellung von Eisenschwamm Heißbrikettieranlagen - HBI-Anlagen, HBI steht für hot briquetted iron - wie sie bei DR-Anlagen üblich sind - DR steht für Direktreduktion - auch bestimmte minimale Brikettiertemperaturen - bevorzugt >650°C zur Vermeidung von erhöhten Wartungskosten und zur Erlangung von Produktdichten > 5g/cm³ -, welche bei zu starker Abkühlung des DRI im Reduktionsaggregat aufgrund endothermer Reaktionen nicht erreicht werden können.

Nach einer bevorzugten Ausführungsform ist der sowohl Kohlenwasserstoff als auch Wasserstoff enthaltende Gasstrom Koksofengas.

Bevorzugt deshalb, weil Koksofengas in einem integrierten Hüttenwerk meist sowieso anfällt oder in einer Stand-alone Kokereianlage lediglich zur Stromerzeugung genutzt beziehungsweise ohne Nutzung abgefackelt wird. Durch das erfinderische Verfahren kann es zur effizienten Eisenerzeugung genutzt werden; die dabei erfolgende stoffliche Nutzung der hat einen höheren Wirkungsgrad als beispielsweise eine Nutzung zur Stromerzeugung.
Unter einem integrierten Hüttenwerk ist eine Stahlerzeugungsroute welche unter Anderem aus Kokerei, Sinteranlage und Hochofen besteht zu verstehen.
Der sowohl Kohlenwasserstoff als auch Wasserstoff enthaltende Gasstrom kann auch in einem Kohlevergaser erzeugtes Gas sein.

Nach einer bevorzugten Ausführungsform erfolgt die Auftrennung des
sowohl Kohlenwasserstoff als auch Wasserstoff enthaltenden Gasstromes in eine wasserstoffreiche Fraktion
und in eine Kohlenwasserstoff - reiche Fraktion
durch zumindest eine Operation aus der Gruppe
- Druckwechseladsorption,
- Membrantrennung.

Die Druckwechseladsorption erfolgt beispielsweise in einer PSA oder VPSA Anlage, wobei PSA für Pressure Swing Adsorption steht, und VPSA für Vacuum Pressure Swing Adsorption. Bevorzugterweise erfolgt vor Druckwechseladsorption eine Vorreinigung des Gasstromes, beispielsweise in einer Vorreinigungseinrichtung zur Abtrennung von Teer und Staub mittels Teerfiltern aus Fasern oder Adsorptionsmaterialien. Aufgrund der unterschiedlicher Adsorptionskräfte kann ein sowohl Kohlenwasserstoff als auch Wasserstoff enthaltender Gasstromes wie beispielsweise Koksofengas bei entsprechender Auslegung der Anlagengröße von Druckwechseladsorptions-Anlagen und durch Betrieb mit entsprechend ausgelegten Zykluszeiten mittels einer PSA-Anlage oder eine VPSA-Anlage in eine wasserstoffreiche Fraktion und in eine Kohlenwasserstoff - reiche Fraktion aufgetrennt werden. Der Wasserstoff fällt auf der Produktseite ohne praktisch nennenswerten Druckverlust an. Die Kohlenwasserstoff - reiche Fraktion fällt unter sehr niedrigem Druck oder unter Vakuum an und wird anschließend auf den in den folgenden Verfahrensschritten erforderlichen Druck verdichtet.

Bei Membrantrennung erfolgt die Auftrennung aufgrund der unterschiedlichen Permeabilität einer Membran. Wasserstoff fällt dabei auf der Niederdruckseite der Membran konzentriert an.

Nach einer bevorzugten Ausführungsform wird zumindest ein Anteil der zumindest einen Teilmenge der Kohlenwasserstoff - reichen Fraktion die zumindest einer Operation aus der Gruppe
- Oxidation mit technisch reinem Sauerstoff,
- Reformierung mittels CO₂ und H₂O,
unterworfen wurde,
mit einem Zusatz-Reduktionsgas
vermischt,
bevor die dabei erhaltene Mischung dieser beiden Komponenten als Reduktionsgas in das die Metalloxide enthaltende Reduktionsaggregat eingeleitet wird.

Dabei wird das in das die Metalloxide enthaltende Reduktionsaggregat eingeleitete Reduktionsgas durch die Vermischung von zwei Komponenten generiert, wobei die eine Komponente durch Oxidation und/oder Reformierung zumindest einer Teilmenge der Kohlenwasserstoff - reichen Fraktion gewonnen wird.

Bei einer derartigen Verfahrensweise können auch andere Gase mit Reduktionspotential stofflich für die Reduktion der Metalloxide genutzt werden, indem sie als Zusatz-Reduktionsgas zugemischt werden.

In einer Vorrichtung zur Durchführung eines solchen erfindungsgemäßen Verfahrens sind entsprechende Zuleitungen zur Heranführung von Zusatz-Reduktionsgasen zu dem Anteil oder gegebenenfalls der gesamten Menge der Kohlenwasserstoff - reichen Fraktion,
die zumindest einer Operation aus der Gruppe
- Oxidation mit technisch reinem Sauerstoff,
- Reformierung mittels CO₂ und H₂O,
unterworfen wurde, vorhanden.

Nach einer bevorzugten Ausführungsform wird das Mischungsverhältnis der beiden Komponenten in Abhängigkeit von einer Temperaturvorgabe für die Mischung eingestellt. Auf diese Weise wird sichergestellt, dass das Reduktionsgas sich in dem für die Reduktion der Metalloxide verfahrenstechnisch und wirtschaftlich günstigen Temperaturbereich befindet. Durch die Einstellung der Temperatur kann die Reaktionsgeschwindigkeit im Reduktionsreaktor-Kinetik - optimal eingestellt werden. Weiters kann der Wirkungsgrad der Reduktionsgasvorwärmung optimiert werden.

Entsprechende Vorrichtungen zur Regelung des Mischungsverhältnisses sowie Temperaturmessvorrichtungen zur Messung der Temperatur der Mischung und/oder zur Messung der Temperaturen der Komponenten sind in einer Vorrichtung zur Durchführung des erfindungsgemäßen Verfahrens vorhanden.

Nach einer bevorzugten Ausführungsform werden die beiden Komponenten vermischt, nachdem das Zusatz-Reduktionsgas in einem Gasofen erhitzt wurde. Das ermöglicht eine verbesserte Temperatureinstellung für das Reduktionsgas. Die Temperatur für das Reduktionsgas soll bevorzugt im Bereich 780 - 1050°C, je nach dem H₂/CO Verhältnis im Reduktionsgas, liegen.

Nach einer bevorzugten Ausführungsform wird aus dem Reduktionsaggregat Topgas abgezogen, und das Zusatz-Reduktionsgas zumindest teilweise durch Mischung von entstaubten und weitgehend von CO₂ befreiten Topgas und zumindest einem weiteren Gases gewonnen. Auf diese Weise werden die im Topgas noch enthaltenen Reduktanten (CO und H₂) für die Reduktion der Metalloxide nochmals ausgenutzt.

Vorteilhafterweise umfasst dabei das zumindest eine weitere Gas die bei der Auftrennung von dem sowohl Kohlenwasserstoff als auch Wasserstoff enthaltenden Gasstrom, bevorzugt von Koksofengas, erhaltene wasserstoffreiche Fraktion. Auf diese Weise wird auch das in dieser Fraktion enthaltene Reduktionspotential für die Reduktion der Metalloxide ausgenutzt; ausgenutzt vor allem dadurch, da die Reduktionsgeschwindigkeit - Kinetik - über Wasserstoff in der Regel schneller ist:

| | |
|---|---|
| 3 Fe₂O₃+H₂ → 2 Fe₃O₄+H₂O | Δ H₂₉₈ = -2,72 [kJ/mol] |
| Fe₃O₄+H₂ → 3FeO+H₂O | Δ H₂₉₈ = +59,83 [kJ/mol] |
| FeO+3H₂ → Fe + 2H₂+H₂O | Δ H₂₉₈ = +29,60 [kJ/mol] |

Vorteilhafterweise wird der Gasofen mit einem Brenngas betrieben das zumindest zum Teil aus zumindest einem Gas aus der Gruppe
- bei der Entfernung von CO₂ aus dem Topgases anfallendes Tailgas,
- Topgas,
- sowohl Kohlenwasserstoff als auch Wasserstoff enthaltender Gasstrom, bevorzugt Koksofengas,
- durch Auftrennung von dem sowohl Kohlenwasserstoff als auch Wasserstoff enthaltenden Gasstrom, bevorzugt von Koksofengas, erhaltene wasserstoffreiche Fraktion,
- durch Auftrennung von dem sowohl Kohlenwasserstoff als auch Wasserstoff enthaltenden Gasstrom, bevorzugt von Koksofengas, erhaltene Kohlenwasserstoff - reiche Fraktion,
besteht.

Auf diese Weise werden diese Gase im Verfahren zur Reduktion der Metalloxide genutzt, was dessen Wirtschaftlichkeit steigert. Bei Verwendung von wasserstoffreichen Gasen zur Unterfeuerung des Gasofens kann der CO₂ Ausstoß entsprechend niedrig gehalten werden.

Einzelne, mehrere oder alle der entsprechenden Brenngas-Zuleitungen zu dem Gasofen sind in einer Vorrichtung zur Durchführung des erfindungsgemäßen Verfahrens vorhanden:
- eine Tailgaszuleitung zur Zuleitung von bei der Entfernung von CO₂ aus dem Topgas anfallendem Tailgas, die von der CO₂-Entfernungsanlage ausgeht.
- eine Topgaszuleitung zur Zuleitung von Topgas, die von einer Topgas aus dem Reduktionsaggregat ableitenden Topgasableitung ausgeht.
- eine Brenngaszuleitung zur Zuleitung von sowohl Kohlenwasserstoff als auch Wasserstoff enthaltendem Gasstrom, die von einer Zuführungsleitung für einen sowohl Kohlenwasserstoff als auch Wasserstoff enthaltenden Gasstrom ausgeht, welche selber in eine Vorrichtung zur Auftrennung von einem sowohl Kohlenwasserstoff als auch Wasserstoff enthaltenden Gasstrom in eine wasserstoffreiche Fraktion und in eine Kohlenwasserstoff-reiche Fraktion mündet.
- eine Brenngaszuleitung zur Zuleitung von durch Auftrennung von dem sowohl Kohlenwasserstoff als auch Wasserstoff enthaltenden Gasstrom, bevorzugt von Koksofengas, erhaltener wasserstoffreicher Fraktion,
   die ausgeht
   von einer Vorrichtung zur Auftrennung von einem sowohl Kohlenwasserstoff als auch Wasserstoff enthaltenden Gasstrom in eine wasserstoffreiche Fraktion und in eine Kohlenwasserstoff-reiche Fraktion,
   oder von einer Ausleitung für die wasserstoffreiche Fraktion, welche selber aus
      einer Vorrichtung zur Auftrennung von einem sowohl Kohlenwasserstoff als auch Wasserstoff enthaltenden Gasstrom in eine wasserstoffreiche Fraktion und in eine Kohlenwasserstoffreiche Fraktion entspringt,
- eine Brenngaszuleitung zur Zuleitung von durch Auftrennung von dem sowohl Kohlenwasserstoff als auch Wasserstoff enthaltenden Gasstrom, bevorzugt von Koksofengas, erhaltener Kohlenwasserstoff - reiche wasserstoffreicher Fraktion die ausgeht
   von einer Zuleitung für die Kohlenwasserstoff - reiche wasserstoffreiche Fraktion, welche selber aus
      einer Vorrichtung zur Auftrennung von einem sowohl Kohlenwasserstoff als auch Wasserstoff enthaltenden Gasstrom in eine wasserstoffreiche Fraktion und in eine Kohlenwasserstoffreiche Fraktion entspringt,
   oder von einer Vorrichtung zur Auftrennung von einem sowohl Kohlenwasserstoff als auch Wasserstoff enthaltenden Gasstrom in eine wasserstoffreiche Fraktion und in eine Kohlenwasserstoff-reiche Fraktion.

Vorteilhafterweise ist
das Reduktionsaggregat ein Reduktionsschacht,
und wird
eine erste Teilmenge
der Kohlenwasserstoff - reichen Fraktion
direkt in den Reduktionsschacht eingeleitet,
und wird
eine zweite Teilmenge
der Kohlenwasserstoff - reichen Fraktion
vor ihrer Einleitung in den Reduktionsschacht
zumindest einer Operation aus der Gruppe
- Oxidation mit technisch reinem Sauerstoff,
- Reformierung mittels CO₂ und H₂O,
unterworfen,
und dann zumindest als Bestandteil eines Reduktionsgases in ein die Metalloxide enthaltendes Reduktionsaggregat eingeleitet,
wobei der Kohlenwasserstoff - Gehalt
durch die zumindest eine Operation aus der genannten Gruppe so eingestellt wird,
dass der Kohlenwasserstoff - Gehalt in dem Reduktionsgas bei Eintritt in das Reduktionsaggregat unter 12 Vol%, bevorzugt unter 10 Vol%, besonders bevorzugt unter 8 Vol%, beträgt.

Die erste Teilmenge kann so zur Aufkohlung des im Reduktionsaggregat erzeugten Metalls genutzt werden; beispielsweise kann es zur Aufkohlung von metallischem Eisen genutzt werden.

Vorteilhafterweise wird der Kohlenwasserstoff - reichen Fraktion vor der Reformierung mittels CO₂ und H₂O zumindest ein CO₂ und/oder H₂O hältiger Gasstrom zugemischt. Dabei kann es sich beispielsweise um Dampf, Tailgas aus einem CO₂ Entfernung Verfahren - beispielsweise aus der Entfernung von CO₂ aus dem Topgas -, Topgas aus Reduktionsschacht, oder Tiegelgas handeln. Es kann auch Wasser zugegeben werden.

Auf diese Weise werden diese Gase im Verfahren zur Reduktion der Metalloxide genutzt, was dessen Wirtschaftlichkeit steigert und die Umweltemissionen reduziert, da CO₂ wieder in CO umgewandelt wird.

Entsprechende Zuleitungen zur Zuleitung eines oder mehrerer dieser Gase, die von solche Gase produzierenden Vorrichtungen beziehungsweise solche Gase führenden Leitungen ausgehen, sind in einer Vorrichtung zur Durchführung des erfindungsgemäßen Verfahrens vorhanden.

In der Kohlenwasserstoff - reichen Fraktion wird auch H₂S angereichert. Nach einer bevorzugten Ausführungsform wird daher eine Entschwefelung der Kohlenwasserstoff - reichen Fraktion durchgeführt, bevor sie zumindest einer Operation aus der Gruppe
- Oxidation mit technisch reinem Sauerstoff,
- Reformierung mittels CO₂ und H₂O, oder
unterworfen wird. Dadurch kann der Schwefelgehalt im weitgehend metallisiertem Metall reduziert werden.
In einer Vorrichtung zur Durchführung eines erfindungsgemäßen Verfahrens ist dann in einer Zuleitung für die Kohlenwasserstoff - reiche Fraktion 3 eine Entschwefelungsvorrichtung vorhanden, bevor- in Strömungsrichtung gesehen - diese in ein Aggregat zur Durchführung einer Operation aus der Gruppe
- Oxidation mit technisch reinem Sauerstoff,
- Reformierung mittels CO₂ und H₂O,
mündet.

Das erfindungsgemäße Verfahren hat die folgenden Vorteile:
- effiziente stoffliche Nutzung von Koksofengas für die Reduktion von Metalloxiden, speziell für die Reduktion von Eisenoxiden zur Eisenschwammproduktion - Vorteil gegenüber der bisher nach dem Stand der Technik erfolgenden thermischen Nutzung von Koksofengas
- gegenüber Nutzung von Erdgas zur Reduktion von Metalloxiden, speziell für die Reduktion von Eisenoxiden zur Eisenschwammproduktion, hohe wirtschaftliche Vorteile gegenüber Erdgas, da das Koksofengas zu niedrigeren Preisen anfällt
- sehr umweltfreundliches Verfahren, insbesondere durch geringe CO₂ und NOₓ, Emissionen, da einerseits bei einigen Ausführungsformen ein sehr wasserstoffreiches Gas zur Reduktion verwendet werden kann, und andererseits durch Nutzung von kohlenstoffarmen Gasen im Reformer und/oder Gasofen deren Emissionen weiter reduziert werden können.
- darüber hinaus kann im Reformer auch ein Teil der CO₂ Emissionen wieder in CO umgewandelt und darauffolgend zur Reduktion genutzt werden.
Der spezifische Kohlenstoffemissionsfaktor ist bei Koksofengas 43,7 kg
CO₂/GJ Brennstoff, während er bei Erdgas bei 55,7 kg CO₂/GJ Brennstoff liegt. Die Verwendung von Koksofengas ist somit wesentlich umweltfreundlicher als die Verwendung von Erdgas.

Ein weiterer Gegenstand der vorliegenden Anmeldung ist eine Vorrichtung zur Durchführung des erfindungsgemäßen Verfahrens
mit einem Reduktionsaggregat zur Reduktion von Metalloxiden,
mit einer Vorrichtung zur Auftrennung von einem sowohl Kohlenwasserstoff als auch Wasserstoff enthaltenden Gasstrom in eine wasserstoffreiche Fraktion und in eine Kohlenwasserstoff - reiche Fraktion,
mit einer aus dieser entspringenden
Zuleitung für die Kohlenwasserstoff - reiche Fraktion, die in ein Aggregat zur Durchführung einer Operation aus der Gruppe
- Oxidation mit technisch reinem Sauerstoff,
- Reformierung mittels CO₂ und H₂O,
mündet,
und mit einer oder mehreren Einleitungsleitungen zur Einleitung von zumindest einem Gasstrom aus der Gruppe
- Kohlenwasserstoff - reiche Fraktion,
- in dem Aggregat zur Durchführung von Oxidation mit technisch reinem Sauerstoff erhaltener Gasstrom,
- in dem Aggregat zur Durchführung von Reformierung mittels CO₂ und H₂O erhaltener Gasstrom,
in das Reduktionsaggregat.

Bevorzugterweise ist die Vorrichtung zur Auftrennung von einem sowohl Kohlenwasserstoff als auch Wasserstoff enthaltenden Gasstrom in eine wasserstoffreiche Fraktion und in eine Kohlenwasserstoff -reiche wasserstoffreiche Fraktion
eine Vorrichtung zur Auftrennung von Koksofengas in eine wasserstoffreiche Fraktion und in eine Kohlenwasserstoff -reiche wasserstoffreiche Fraktion.

Bevorzugterweise ist die Vorrichtung zur Auftrennung von einem sowohl Kohlenwasserstoff als auch Wasserstoff enthaltenden Gasstrom in eine wasserstoffreiche Fraktion und in eine Kohlenwasserstoff reiche Fraktion eine Vorrichtung aus der Gruppe
- Vorrichtung zur Druckwechseladsorption,
- Vorrichtung zur Membrantrennung.

Bevorzugterweise münden
die eine oder mehreren Einleitungsleitungen
in das Reduktionsaggregat,
wobei
vor der Mündung zumindest einer der Einleitungsleitungen in das Reduktionsaggregat eine
Zusatz-Reduktionsgasleitung zur Zuführung von Zusatz-Reduktionsgas zum Reduktionsaggregat
in diese Einleitungsleitung mündet.

Bevorzugterweise ist vor der Mündung der Zusatz-Reduktionsgasleitung in die Einleitungsleitung ein Gasofen in der Zusatz-Reduktionsgasleitung vorhanden. Bevorzugterweise sind x Einleitungsleitungen vorhanden, wobei x größer 2 oder gleich 2 ist, von denen bei maximal x-1 Einleitungsleitungen gilt, dass vor der Mündung zumindest einer der Einleitungsleitungen in das Reduktionsaggregat eine
Zusatz-Reduktionsgasleitung zur Zuführung von Zusatz-Reduktionsgas zum Reduktionsaggregat in diese Einleitungsleitung mündet.
Auf diese Weise ist zumindest eine Einleitungsleitung vorhanden, in die keine Zusatz-Reduktionsgasleitung mündet. Somit kann eine Teilmenge der Kohlenwasserstoff - reichen Fraktion direkt in den Reduktionsschacht eingeleitet werden, ohne mit Zusatz-Reduktionsgas vermischt zu werden; diese Teilmenge kann beispielsweise zur Aufkohlung des im Reduktionsaggregat erzeugten Metalls genutzt werden; beispielsweise kann es zur Aufkohlung von metallischem Eisen genutzt werden.

Nach einer Ausführungsform ist das Reduktionsaggregat ein Reduktionsschacht, beispielsweise ein Festbettreduktionsschacht zur Durchführung eines MIDREX® oder HYL® Reduktionsverfahrens.

Nach einer Ausführungsform ist das Reduktionsaggregat eine Wirbelschichtkaskade.

### Kurze Beschreibung der Zeichnungen

Anhand der folgenden schematischen und beispielhaften Figuren wird die Erfindung anhand von Ausführungsformen erläutert.

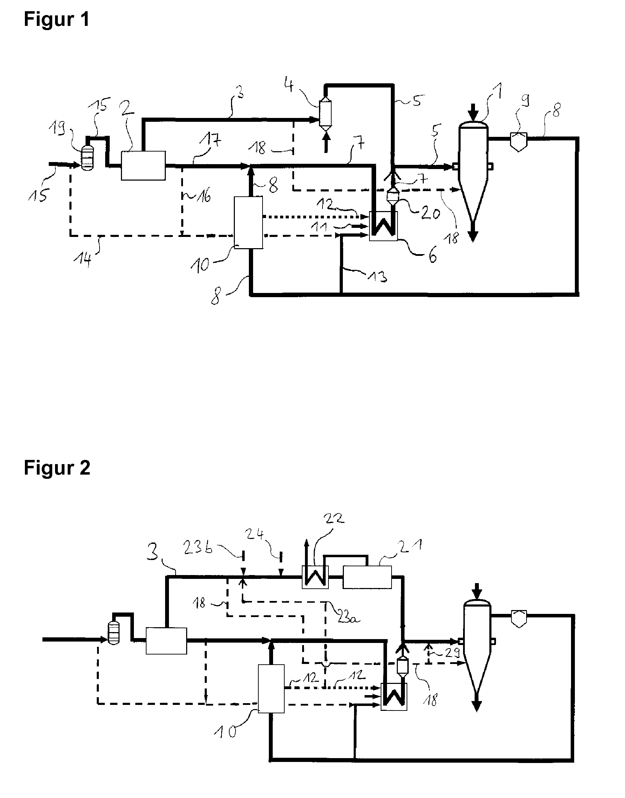

Figur 1 zeigt eine Vorrichtung zur Durchführung eines erfindungsgemäßen Verfahrens, bei dem Koksofengas in eine wasserstoffreiche Fraktion und in eine Kohlenwasserstoff - reiche Fraktion aufgetrennt wird, und die letztere einer Oxidation unterworfen wird, bevor es als Teil eines Reduktionsgases in einen Reduktionsschacht eingeleitet wird.
Figur 2 zeigt eine zu Figur 1 analoge Vorrichtung und Verfahrensführung, mit dem Unterschied, dass die Kohlenwasserstoff - reiche Fraktion einer Reformierung mittels CO₂ und H₂O unterworfen wird, bevor es als Teil eines Reduktionsgases in einen Reduktionsschacht eingeleitet wird.

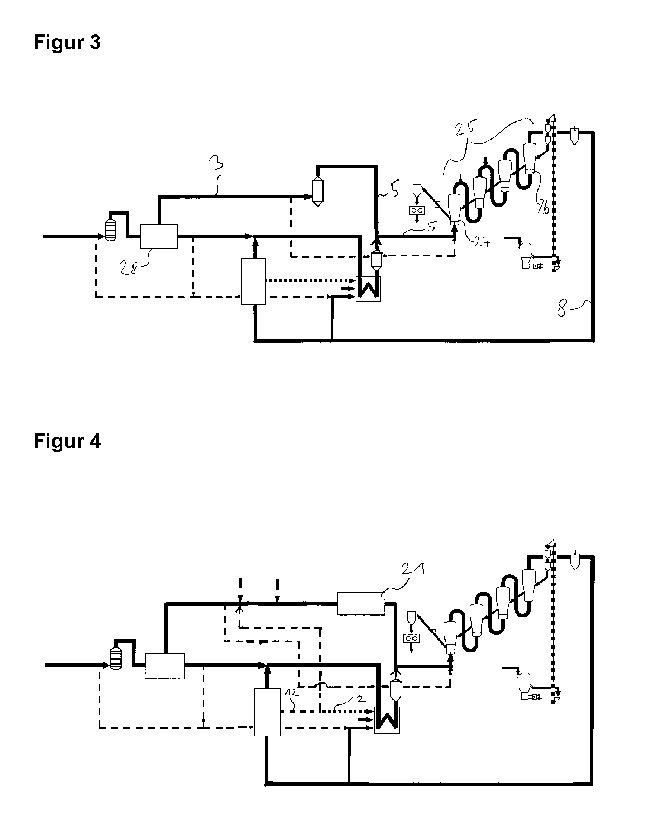

Figur 3 zeigt eine erfindungsgemäße Vorrichtung und Verfahrensführung, die sich von Figur 1 hauptsächlich dadurch unterscheidet, dass eine Wirbelschichtkaskade als Reduktionsaggregat vorliegt, und als Vorrichtung zur Auftrennung von Koksofengas statt einer Vorrichtung zur Druckwechseladsorption eine Vorrichtung zur Membrantrennung vorliegt.
Figur 4 zeigt eine erfindungsgemäße Vorrichtung und Verfahrensführung, die sich von Figur 1 hauptsächlich dadurch unterscheidet, dass eine Wirbelschichtkaskade als Reduktionsaggregat vorliegt, und als Vorrichtung zur Auftrennung von Koksofengas statt einer Vorrichtung zur Druckwechseladsorption eine Vorrichtung zur Membrantrennung vorliegt.

### Beschreibung der Ausführungsformen

Figur 1 zeigt eine Vorrichtung zur Durchführung eines erfindungsgemäßen Verfahrens. Dieses umfasst als Reduktionsaggregat zur Reduktion von Metalloxiden einen Reduktionsschacht 1, der Eisenerz, also Eisenoxide, enthält. Sie umfasst ebenso eine Vorrichtung zur Auftrennung von einem sowohl Kohlenwasserstoff als auch Wasserstoff enthaltenden Gasstrom, in diesem Fall eine PSA- oder eine VPSA-Anlage 2 mittels Druckwechseladsorption, in eine wasserstoffreiche Fraktion und in eine Kohlenwasserstoff-reiche Fraktion. Im vorliegenden Beispiel ist der sowohl Kohlenwasserstoff als auch Wasserstoff enthaltende Gasstrom Koksofengas. Aus der PSA- oder VPSA-Anlage 2 entspringt eine Zuleitung für die Kohlenwasserstoff - reiche Fraktion 3, die in ein Aggregat zur Durchführung einer Oxidation mit technisch reinem Sauerstoff 4 mündet. In diesem Aggregat zur Durchführung einer Oxidation mit technisch reinem Sauerstoff 4 wird die Kohlenwasserstoff - reiche Fraktion partiell oxidiert; das heißt, es wird nicht die gesamte Stoffmenge oxidiert, sondern nur ein Teil der Stoffmenge der Kohlenwasserstoff - reichen Fraktion. Über eine Einleitungsleitung 5 zur Einleitung von dem in dem Aggregat zur Durchführung von Oxidation mit technisch reinem Sauerstoff 4 erhaltenen Gasstrom, wird dieser als Bestandteil eines Reduktionsgases in den Reduktionsschacht 1 eingeleitet. Bei der partiellen Oxidation wird der Kohlenwasserstoff - Gehalt so eingestellt, dass der Kohlenwasserstoff - Gehalt in dem Reduktionsgas bei Eintritt in den Reduktionsschacht unter 12 Vol% beträgt.

Der in dem Aggregat zur Durchführung von Oxidation mit technisch reinem Sauerstoff 4 erhaltenen Gasstrom wird mit einem Zusatz-Reduktionsgas vermischt, die dabei erhaltene Mischung wird als Reduktionsgas in den Reduktionsschacht 1 eingeleitet. Die beiden Komponenten des Reduktionsgases werden vermischt, nachdem das Zusatz-Reduktionsgas in einem Gasofen 6 erhitzt wurde. Das Zusatz-Reduktionsgas wird über eine Zusatz-Reduktionsgasleitung 7 zur Zuführung von Zusatz-Reduktionsgas zum Reduktionsaggregat 1, welche Reduktionsgasleitung 7 in die Einleitungsleitung 5 mündet, zugemischt. Über die Einleitungsleitung 5 wird also sowohl der in dem Aggregat zur Durchführung von Oxidation mit technisch reinem Sauerstoff 4 erhaltene Gasstrom als auch das Zusatz-Reduktionsgas in den Reduktionsschacht 1 eingeleitet, und zwar als Mischung, die Reduktionsgas genannt wird. Die Temperaturvorgabe des Zusatz-Reduktionsgases, welches im Gasofen 6 erhitzt wird, wird in Abhängigkeit von einer Temperaturvorgabe für die Mischung eingestellt. Der Gasofen 6 ist in der Zusatz-Reduktionsgasleitung 7 angeordnet.

Aus dem Reduktionsschacht 1 wird Topgas über eine Topgasableitung 8 abgeleitet. Das Zusatz-Reduktionsgas wird im dargestellten Beispiel durch Mischung von entstaubten - ein Gaswäscher 9 ist in der Topgasableitung 8 vorhanden - und weitgehend von CO₂ befreiten - eine CO₂-Entfernungsanlage 10 ist in der Topgasableitung 8 vorhanden - Topgas und einem weiteren Gas gewonnen. Das weitere Gas ist die bei der Auftrennung von dem Koksofengas erhaltene wasserstoffreiche Fraktion.

Der Gasofen 6 wird mit einem Brenngas betrieben. Das Brenngas wird unter Zuleitung von Luft durch eine in den Gasbrenner mündende Luftzuleitung 11 verbrannt. Das Brenngas besteht aus den Gasen aus der Gruppe
- bei der Entfernung von CO₂ aus dem Topgases anfallendes Tailgas,
- Topgas,
- Koksofengas,
- durch Auftrennung von Koksofengas erhaltene wasserstoffreiche Fraktion.
Zur Zuführung dieser Gase in den Gasbrenner 6 sind
- eine Tailgaszuleitung 12 zur Zuleitung von bei der Entfernung von CO₂ aus dem Topgas anfallendem Tailgas vorhanden, die von der CO₂-Entfernungsanlage 10 ausgeht und in den Gasbrenner mündet,
- eine Topgaszuleitung 13 zur Zuleitung von Topgas vorhanden, die von der Topgas aus dem Reduktionsaggregat ableitenden Topgasableitung 8 ausgeht und in den Gasbrenner mündet,
- eine Koksofengaszuleitung 14 zur Zuleitung von Koksofengas vorhanden, die von einer Zuführungsleitung für Koksofengas 15 ausgeht und in die Topgaszuleitung 13 mündet,
- eine Wasserstofffraktions-Zuleitung 16 vorhanden, die von einer von der PSA oder VPSA-Anlage 2 ausgehenden Wasserstofffraktions-Ausleitung 17 abzweigt und in die Koksofengaszuleitung 14 mündet.
Damit Zusatz-Reduktionsgas durch Mischung von entstaubten und weitgehend von CO₂ befreiten Topgas und der bei der Auftrennung von dem Koksofengas erhaltene wasserstoffreichen Fraktion gewonnen werden kann, münden sowohl die Wasserstofffraktions-Ausleitung 17 als auch die Topgasableitung 8 in die Zusatz-Reduktionsgasleitung 7.
Die Zuführungsleitung für Koksofengas 15 geht von einer nicht dargestellten Quelle für Koksofengas aus und mündet in die PSA- oder VPSA-Anlage 2.

In der in Figur 1 dargestellten Vorrichtung sind zwei in den Reduktionsschacht 1 mündende Einleitungsleitungen vorhanden. Die Einleitungsleitung 5, genannt erste Einleitungsleitung, wurde bereits besprochen. Eine weitere Einleitungsleitung, genannt zweite Einleitungsleitung 18, zweigt von der Zuleitung für die Kohlenwasserstoff - reiche Fraktion 3 ab und mündet in den Reduktionsschacht. Durch diese zweite Einleitungsleitung 18 kann eine Teilmenge der Kohlenwasserstoff - reichen Fraktion direkt in den Reduktionsschacht eingeleitet werden. Diese Teilmenge kann so zur Aufkohlung des im Reduktionsschacht 1 erzeugten metallischen Eisens, in diesem Fall Eisenschwamm, genutzt werden. Eine Kühlgasleitung zur Zufuhr von Kühlgas in den Reduktionsschacht 1 ist aus Gründen der Übersichtlichkeit nicht dargestellt; grundsätzlich könnte zu dem Zweck der Aufkohlung auch eine Teilmenge der Kohlenwasserstoff-reichen Fraktion über eine entsprechende Abzweigung von der Zuleitung für die Kohlenwasserstoff-reiche Fraktion 3, die in die Kühlgasleitung mündet, dem Kühlgas zugemischt werden.

In der in der Zuführungsleitung für Koksofengas 15 angeordneten Teerfiltereinrichtung 19 wird Teer aus dem Koksofengas entfernt.

In dem Brenner 20 kann das Zusatz-Reduktionsgas unter Zufuhr von technisch reinem Sauerstoff partiell oxidiert werden, falls dies zur Temperaturerhöhung gewünscht ist.

Auf die Darstellung von für die vorliegende Erfindung nicht wesentlichen Vorrichtungsteilen wurde aus Gründen der Übersichtlichkeit verzichtet, beispielsweise auf die Darstellung diverser Kompressoren, Bypassleitungen, Gasometer, Gaskühler, Fackelkamine.

In Figur 2 wird bei sonst analoger Vorrichtung und Verfahrensführung die Kohlenwasserstoff - reiche Fraktion statt einer partiellen Oxidation einer Reformierung mittels CO₂ und H₂O unterworfen, bevor es als Teil eines Reduktionsgases in einen Reduktionsschacht eingeleitet wird. Zu Figur 1 gleiche Anlagenteile und Verfahrensschritte werden hier großteils nicht erneut beschrieben, die Bezugszeichen für gleiche Anlagenteile werden zur besseren Übersichtlichkeit nicht eingetragen. Die Reformierung findet in einem Aggregat zur Durchführung einer Reformierung mittels CO₂ und H₂O, hier einem Reformer 21 statt, in das die Zuleitung für die Kohlenwasserstoff - reiche Fraktion 3 mündet. Abgas aus dem Reformer 21 wird über einen Wärmetauscher 22 zur Erwärmung der Kohlenwasserstoff - reichen Fraktion vor Eintritt in den Reformer 21 genutzt.
Über mehrere Zuspeisleitungen 23a, 23b, die in die Zuleitung für die Kohlenwasserstoff - reiche Fraktion 3 münden, werden der Kohlenwasserstoff-reichen Fraktion vor Eintritt in den Reformer 21 mehrere CO₂ hältige Gasströme zugemischt. Über Zuspeisleitung 23a wird Tailgas aus der CO₂-Entfernungsanlage 10 zugemischt; die Zuspeisleitung 23a entspringt aus der Tailgaszuleitung 12. Über Zuspeisleitung 23b wird Topgas zugemischt. Über eine Wasser-Zuspeisleitung 24, die in die Zuleitung für die Kohlenwasserstoff - reiche Fraktion 3 mündet, wird der Kohlenwasserstoff - reichen Fraktion vor Eintritt in den Reformer 21 Dampf und/oder Wasser zugemischt.
Der Reformer 21 kann mit Topgas, Koksofengas oder mit der Kohlenwasserstoff - reichen Fraktion befeuert werden; entsprechende in den Reformer 21 mündende Leitungen sind der Übersichtlichkeit halber nicht dargestellt.

Über eine Abzweigleitung 29, die von der zweite Einleitungsleitung 18 abzweigt und in die erste Einleitungsleitung 5 mündet, kann der Kohlenwasserstoff-Gehalt in dem Reduktionsgas bei Eintritt in den Reduktionsschacht 1 beeinflusst werden per Zuleitung von Kohlenwasserstoff-reicher Fraktion.

In Figur 3 ist das Reduktionsaggregat eine Wirbelschichtkaskade 25, aus deren in Strömungsrichtung des Reduktionsgases gesehen letzten Wirbelschichtreaktor 26 Topgas abgezogen wird; die Topgasleitung ist wie die Topgasleitung in Figur 1 mit dem Bezugszeichen 8 versehen. Die Einleitungsleitung 5, die in Figur 1 in den Reduktionsschacht 1 mündend dargestellt ist, ist in Figur 3 analog in den in Strömungsrichtung des Reduktionsgases gesehen ersten Wirbelschichtreaktor 27 mündend dargestellt. Als Vorrichtung zur Auftrennung von Koksofengas liegt - statt wie in Figur 1 einer Vorrichtung zur Druckwechseladsorption - eine Vorrichtung zur Membrantrennung 28 vor. Über eine Abzweigung von der Zuleitung für die Kohlenwasserstoff-reiche Fraktion 3 kann Kohlenwasserstoffreiche Fraktion in die erste Einleitungsleitung 5 eingespeist werden, was eine Möglichkeit zur Beeinflussung des Kohlenwasserstoff-Gehaltes im Reduktionsgas bietet.

Figur 4 unterscheidet sich von Figur 2 durch dieselben Änderungen, durch die sich Figur 3 von Figur 1 unterscheidet. Außerdem ist in Figur 1 im Gegensatz zu Figur 2 kein Wärmetauscher 22 vorhanden.

### Liste der Bezugszeichen

- 1: Reduktionsschacht
- 2: PSA- oder VPSA-Anlage
- 3: Zuleitung für die Kohlenwasserstoffreiche Fraktion
- 4: Aggregat zur Durchführung einer
Oxidation mit technisch reinem
Sauerstoff
- 5: (erste) Einleitungsleitung
- 6: Gasofen
- 7: Zusatz-Reduktionsgasleitung zur
Zuführung von Zusatz-Reduktionsgas
zum Reduktionsaggregat 1
- 8: Topgasableitung
- 9: Gaswäscher
- 10: CO₂-Entfernungsanlage
- 11: Luftzuleitung
- 12: Tailgaszuleitung
- 13: Topgaszuleitung
- 14: Koksofengaszuleitung
- 15: Zuführungsleitung für Koksofengas
- 16: Wasserstofffraktions-Zuleitung
- 17: Wasserstofffraktions-Ausleitung
- 18: zweite Einleitungsleitung
- 19: Teerfiltereinrichtung
- 20: Brenner
- 21: Reformer
- 22: Wärmetauscher
- 23a, 23b: Zuspeisleitung
- 24: Wasser-Zuspeisleitung
- 25: Wirbelschichtkaskade
- 26: Letzter Wirbelschichtreaktor
- 27: Erster Wirbelschichtreaktor
- 28: Vorrichtung zur Membrantrennung
- 29: Abzweigleitung

## Patentansprüche

1. Verfahren zur Reduktion von Metalloxiden unter Verwendung eines Koksofengases,
**dadurch gekennzeichnet, dass**
das Koksofengas
in eine wasserstoffreiche Fraktion
und in eine Kohlenwasserstoff - reiche Fraktion
aufgetrennt wird,
und nachfolgend
zumindest eine Teilmenge der Kohlenwasserstoff - reichen Fraktion zumindest einer Operation aus der Gruppe
- Oxidation mit technisch reinem Sauerstoff,
- Reformierung mittels CO₂ und H₂O
unterworfen wird,
und dann zumindest als Bestandteil eines Reduktionsgases in ein die Metalloxide enthaltendes Reduktionsaggregat eingeleitet wird,
wobei der Kohlenwasserstoff - Gehalt durch die zumindest eine Operation aus der genannten Gruppe so eingestellt wird,
dass der Kohlenwasserstoff - Gehalt in dem Reduktionsgas bei Eintritt in das Reduktionsaggregat unter 12 Vol%, bevorzugt unter 10 Vol%, besonders bevorzugt unter 8 Vol%, aber über 1 Vol%, bevorzugt über 2 Vol%, besonders bevorzugt über 3 Vol%, beträgt,
und wobei
zumindest ein Anteil der
zumindest einen Teilmenge der Kohlenwasserstoff - reichen Fraktion die zumindest einer Operation aus der Gruppe
- Oxidation mit technisch reinem Sauerstoff,
- Reformierung mittels CO₂ und H₂O,
unterworfen wurde,
mit einem Zusatz-Reduktionsgas
vermischt wird,
bevor die dabei erhaltene Mischung dieser beiden Komponenten als Reduktionsgas in das die Metalloxide enthaltende Reduktionsaggregat eingeleitet wird,
wobei das Zusatz-Reduktionsgas zumindest teilweise durch Mischung von entstaubten und weitgehend von CO₂ befreiten Topgas und zumindest einem weiteren Gas gewonnen wird, wobei das zumindest eine weitere Gas die bei der Auftrennung von dem Koksofengas erhaltene wasserstoffreiche Fraktion umfasst.

2. Verfahren nach einem der Ansprüche 1 bis 3, **dadurch gekennzeichnet, dass** die Auftrennung des
sowohl Kohlenwasserstoff als auch Wasserstoff enthaltenden Gasstromes in eine wasserstoffreiche Fraktion
und in eine Kohlenwasserstoff - reiche Fraktion
durch zumindest eine Operation aus der Gruppe
- Druckwechseladsorption,
- Membrantrennung
erfolgt.

3. Verfahren nach Anspruch 1 oder 2, **dadurch gekennzeichnet, dass** die beiden Komponenten vermischt werden, nachdem das Zusatz-Reduktionsgas in einem Gasofen erhitzt wurde.

4. Verfahren nach Anspruch 3, **dadurch gekennzeichnet, dass** der Gasofen mit einem Brenngas betrieben wird, das zumindest zum Teil aus zumindest einem Gas aus der Gruppe
- bei der Entfernung von CO₂ aus dem Topgases anfallendes Tailgas,
- Topgas,
- Koksofengas,
- durch Auftrennung von dem Koksofengas erhaltene wasserstoffreiche Fraktion,
- durch Auftrennung von dem Koksofengas erhaltene Kohlenwasserstoff - reiche Fraktion,
besteht.

5. Verfahren nach einem der Ansprüche 1 bis 4, wobei das Reduktionsaggregat ein Reduktionsschacht ist, **dadurch gekennzeichnet, dass**
eine erste Teilmenge
der Kohlenwasserstoff - reichen Fraktion
direkt in den Reduktionsschacht eingeleitet wird,
und
eine zweite Teilmenge
der Kohlenwasserstoff - reichen Fraktion
vor ihrer Einleitung in den Reduktionsschacht
zumindest einer Operation aus der Gruppe
- Oxidation mit technisch reinem Sauerstoff,
- Reformierung mittels CO₂ und H₂O,
unterworfen wird,
und dann zumindest als Bestandteil eines Reduktionsgases in ein die Metalloxide enthaltendes Reduktionsaggregat eingeleitet wird,
wobei der Kohlenwasserstoff - Gehalt
durch die zumindest eine Operation aus der genannten Gruppe so eingestellt wird,
dass der Kohlenwasserstoff - Gehalt in dem Reduktionsgas bei Eintritt in das Reduktionsaggregat unter 12 Vol%, bevorzugt unter 10 Vol%, besonders bevorzugt unter 8 Vol%, beträgt.

6. Verfahren nach einem der Ansprüche 1 bis 5, **dadurch gekennzeichnet, dass** der Kohlenwasserstoff - reichen Fraktion vor der Reformierung mittels CO₂ und H₂O zumindest ein CO₂ und/oder H₂O hältiger Gasstrom zugemischt wird.

7. Vorrichtung zur Durchführung eines Verfahrens nach einem der Ansprüche 1 bis 6,
mit einem Reduktionsaggregat (1,25) zur Reduktion von Metalloxiden,
mit einer Vorrichtung (2,28) zur Auftrennung von Koksofengas in eine wasserstoffreiche Fraktion und in eine Kohlenwasserstoff - reiche Fraktion,
mit einer aus dieser entspringenden
Zuleitung für die Kohlenwasserstoff - reiche Fraktion, die in ein Aggregat (21) zur Durchführung einer Operation aus der Gruppe
- Oxidation mit technisch reinem Sauerstoff,
- Reformierung mittels CO₂ und H₂O,
mündet,
und mit einer oder mehreren Einleitungsleitungen (5,18) zur Einleitung von zumindest einem Gasstrom aus der Gruppe
- Kohlenwasserstoff - reiche Fraktion,
- in dem Aggregat zur Durchführung von Oxidation mit technisch reinem Sauerstoff erhaltender Gasstrom,
- in dem Aggregat zur Durchführung von Reformierung mittels CO₂ und H₂O erhaltener Gasstrom,
in das Reduktionsaggregat (1,25),
wobei die
eine oder mehreren Einleitungsleitungen (5,18) in das Reduktionsaggregat münden, und
vor der Mündung zumindest einer der Einleitungsleitungen (5) in das Reduktionsaggregat eine
Zusatz-Reduktionsgasleitung (7) zur Zuführung von Zusatz-Reduktionsgas zum Reduktionsaggregat in diese Einleitungsleitung mündet.

8. Vorrichtung nach Anspruch 7, **dadurch gekennzeichnet, dass** die Vorrichtung (2,28) zur Auftrennung von Koksofengas in eine wasserstoffreiche Fraktion und in eine Kohlenwasserstoff Fraktion
eine Vorrichtung aus der Gruppe
- Vorrichtung zur Druckwechseladsorption (2),
- Vorrichtung zur Membrantrennung (28),
ist.

9. Vorrichtung nach Anspruch 7 oder 8, **dadurch gekennzeichnet, dass** vor der Mündung der Zusatz-Reduktionsgasleitung (7) in die Einleitungsleitung (5) ein Gasofen (6) in der Zusatz-Reduktionsgasleitung (7) vorhanden ist.

10. Vorrichtung nach einem der Ansprüche 7 bis 9, **dadurch gekennzeichnet, dass** x Einleitungsleitungen (5,18) vorhanden, wobei x größer **2** oder gleich **2** ist, von denen bei maximal x-1 Einleitungsleitungen (5) gilt, dass vor der Mündung zumindest einer der Einleitungsleitungen (5) in das Reduktionsaggregat eine Zusatz-Reduktionsgasleitung (7) zur Zuführung von Zusatz-Reduktionsgas zum Reduktionsaggregat in diese Einleitungsleitung (5) mündet.

11. Vorrichtung nach einem der Ansprüche 7 bis 10, **dadurch gekennzeichnet, dass** das Reduktionsaggregat (1,25) ein Reduktionsschacht (1) ist.

12. Vorrichtung zur Durchführung eines Verfahrens nach einem der Ansprüche 7 bis 11, **dadurch gekennzeichnet, dass** das Reduktionsaggregat (1,25) eine Wirbelschichtkaskade (25) ist.

## Claims

1. Process for reducing metal oxides using a coke oven gas,
**characterized in that**
the coke oven gas
is separated
into a hydrogen-rich fraction
and a hydrocarbon-rich fraction,
and subsequently
at least a subquantity of the hydrocarbon-rich fraction is subjected
to at least one operation of the group
- oxidation using technically pure oxygen,
- reforming using CO₂ and H₂O,
and then it is introduced at least as a component of a reducing gas into a reducing unit containing the metal oxides,
wherein the hydrocarbon content is adjusted by the at least one operation of the aforementioned group,
in such a manner that the hydrocarbon content in the reducing gas is, on entry into the reducing unit, less than 12% by volume, preferably less than 10% by volume, particularly preferably less than 8% by volume, but greater than 1% by volume, preferably greater than 2% by volume, particularly preferably greater than 3% by volume, and wherein
at least a proportion of the
at least one subquantity of the hydrocarbon-rich fraction which was subjected to at least one operation of the group
- oxidation using technically pure oxygen,
- reforming using CO₂ and H₂O,
is mixed
with an auxiliary reducing gas,
before the resultant mixture of these two components is introduced
as reducing gas into the reducing unit containing the metal oxides,
wherein the auxiliary reducing gas is obtained at least in part by mixing top gas that is dedusted and substantially freed from CO₂, and at least one further gas, wherein the at least one further gas comprises the hydrogen-rich fraction obtained in the separation of the coke oven gas.

2. Process according to Claim 1, **characterized in that** the gas stream containing not only hydrocarbon but also hydrogen
is separated
into a hydrogen-rich fraction
and a hydrocarbon-rich fraction
by at least one operation of the group
- pressure-swing adsorption,
- membrane separation.

3. Process according to Claim 1 or 2, **characterized in that** the two components are mixed after the auxiliary reducing gas has been heated in a gas furnace.

4. The process according to Claim 3, **characterized in that** the gas furnace is operated with a fuel gas which at least in part comprises at least one gas of the group
- tail gas formed in the removal of CO₂ from the top gas,
- top gas,
- coke oven gas,
- hydrogen-rich fraction obtained by separation of the coke oven gas,
- hydrocarbon-rich fraction obtained by separation of the coke oven gas.

5. Process according to any one of Claims 1 to 4, wherein the reducing unit is a reducing shaft, **characterized in that**
a first subquantity
of the hydrocarbon-rich fraction
is introduced directly into the reducing shaft,
and
a second subquantity
of the hydrocarbon-rich fraction
before introduction thereof into the reducing shaft is subjected
to at least one operation of the group
- oxidation using technically pure oxygen
- reforming using CO₂ and H₂O,
and then is introduced at least as component of a reducing gas into a reducing unit containing the metal oxides, wherein the hydrocarbon content
is set by the at least one operation of said group, in such a manner
that the hydrocarbon content in the reducing gas, on entry into the reducing unit, is less than 12% by volume, preferably less than 10% by volume, particularly preferably less than 8% by volume.

6. Process according to any one of Claims 1 to 5,
**characterized in that**
at least one gas stream containing CO₂ and/or H₂O is added to the hydrocarbon-rich fraction before reforming using CO₂ and H₂O.

7. Device for carrying out a process according to any one of Claims 1 to 6,
having a reducing unit (1, 25) for reducing metal oxides, having a device (2, 28) for separating coke oven gas into a hydrogen-rich fraction and a hydrocarbon-rich fraction,
having, arising therefrom, a
feed line for the hydrocarbon-rich fraction which opens out
into a unit (21) for
carrying out an operation of the group
- oxidation using technically pure oxygen
- reforming using CO₂ and H₂O,
and having one or more introduction lines (5, 18) for introducing at least one gas stream from the group
- hydrocarbon-rich fraction,
- gas stream obtained in the unit for carrying out oxidation using technically pure oxygen,
- gas stream obtained in the unit for carrying out reforming using CO₂ and H₂O,
into the reducing unit (1, 25),
wherein the
one or more introduction lines (5, 18) open out into the reducing unit, and
upstream of the opening of at least one of the introduction lines (5) into the
reducing unit, an
auxiliary reducing gas line (7) for feeding auxiliary reducing gas to the
reducing unit opens out into this introduction line.

8. Device according to Claim 7, **characterized in that** the device (2, 28) for separating coke oven gas into a hydrogen-rich fraction and a hydrocarbon fraction is a device of the group
- device for pressure-swing adsorption (2),
- device for membrane separation (28).

9. Device according to Claim 7 or 8, **characterized in that** upstream of the opening of the auxiliary reducing gas line (7) into the introduction line (5), a
gas furnace (6) is present in the auxiliary reducing gas line (7).

10. Device according to any one of Claims 7 to 9, **characterized in that** x introduction lines (5, 18) are present, wherein x is greater than 2 or is equal to 2, of the at most x-1 introduction lines (5) it is true that, upstream of the opening of at least one of the introduction lines (5) into the reducing unit, an auxiliary reducing gas line (7), for feeding auxiliary reducing gas to the reducing unit, opens out into this introduction line (5).

11. Device according to any one of Claims 7 to 10, **characterized in that** the reducing unit (1, 25) is a reduction shaft (1).

12. Device for carrying out a process according to any one of Claims 7 to 11, **characterized in that** the reducing unit (1, 25) is a fluidized-bed cascade (25).

## Revendications

1. Procédé de réduction d'oxydes métalliques en utilisant un gaz de four à coke, **caractérisé en ce que**
on sépare le gaz de four à coke en une fraction riche en hydrogène et une fraction riche en hydrocarbure,
et ensuite
on soumet au moins une quantité partielle de la fraction riche en hydrocarbure à au moins une opération du groupe
- oxydation avec de l'oxygène techniquement pur,
- reformage au moyen de CO₂ et H₂O,
et ensuite on l'introduit en tant que constituant d'un gaz réducteur dans un ensemble de réduction contenant les oxydes métalliques,
dans lequel on règle la teneur en hydrocarbure au moyen de ladite au moins une opération du groupe précité, d'une manière telle que la teneur en hydrocarbure dans le gaz réducteur lors de l'entrée dans l'ensemble de réduction vaille moins de 12 % en volume, de préférence moins de 10 % en volume, de préférence encore moins de 8 % en volume, mais plus de 1 % en volume, de préférence plus de 2 % en volume, et de préférence encore plus de 3 % en volume,
et dans lequel on mélange au moins une partie de ladite au moins une quantité partielle de la fraction riche en hydrocarbure, qui a été soumise à au moins une opération du groupe
- oxydation avec de l'oxygène techniquement pur,
- reformage au moyen de CO₂ et H₂O,
avec un gaz réducteur additionnel,
avant que le mélange ainsi obtenu de ces deux composants soit introduit en tant que gaz réducteur dans l'ensemble de réduction contenant les oxydes métalliques,
dans lequel on obtient le gaz réducteur additionnel au moins partiellement par mélange de gaz de gueulard dépoussiéré et largement débarrassé de CO₂ et d'au moins un autre gaz, dans lequel ledit au moins un autre gaz comprend la fraction riche en hydrogène obtenue lors de la séparation du gaz de four à coke.

2. Procédé selon la revendication 1, **caractérisé en ce que** la séparation du flux de gaz contenant aussi bien un hydrocarbure que de l'hydrogène en une fraction riche en hydrogène et une fraction riche en hydrocarbure est effectuée par au moins une opération du groupe
- adsorption par inversion de pression
- séparation membranaire.

3. Procédé selon la revendication 1 ou 2, **caractérisé en ce que** l'on mélange les deux composants, après que le gaz réducteur additionnel ait été chauffé dans un four à gaz.

4. Procédé selon la revendication 3, **caractérisé en ce que** l'on alimente le four à gaz avec un gaz combustible, qui se compose au moins en partie d'au moins un gaz du groupe
- gaz résiduel obtenu lors de l'élimination du CO₂ hors du gaz de gueulard,
- gaz de gueulard,
- gaz de four à coke,
- fraction riche en hydrogène obtenue par séparation du gaz de four à coke,
- fraction riche en hydrocarbure obtenue par séparation du gaz de four à coke.

5. Procédé selon l'une quelconque des revendications 1 à 4, dans lequel l'ensemble de réduction est une cuve de réduction, **caractérisé en ce que**
on introduit au moins une première quantité partielle de la fraction riche en hydrocarbure directement dans la cuve de réduction
et
on soumet une deuxième quantité partielle de la fraction riche en hydrocarbure, avant son introduction dans la cuve de réduction, à au moins une opération du groupe
- oxydation avec de l'oxygène techniquement pur,
- reformage au moyen de CO₂ et H₂O,
et on l'introduit ensuite en tant que constituant d'un gaz réducteur dans un ensemble de réduction contenant les oxydes métalliques,
dans lequel on règle la teneur en hydrocarbure par ladite au moins une opération du groupe précité, de telle manière que la teneur en hydrocarbure dans le gaz réducteur lors de l'entrée dans l'ensemble de réduction vaille moins de 12 % en volume, de préférence moins de 10 % en volume, et de préférence encore moins de 8 % en volume.

6. Procédé selon l'une quelconque des revendications 1 à 5, **caractérisé en ce que** l'on ajoute au moins un flux de gaz contenant du CO₂ et/ou du H₂O à la fraction riche en hydrocarbure avant le reformage au moyen de CO₂ et de H₂O.

7. Dispositif pour la mise en oeuvre d'un procédé selon l'une quelconque des revendications 1 à 6,
avec un ensemble de réduction (1, 25) pour la réduction d'oxydes métalliques,
avec un dispositif (2, 28) pour la séparation de gaz de four à coke en une fraction riche en hydrogène et une fraction riche en hydrocarbure,
avec une conduite d'alimentation émergeant de celui-ci pour la fraction riche en hydrocarbure, qui débouche dans un ensemble (21) pour l'exécution d'une opération du groupe
- oxydation avec de l'oxygène techniquement pur,
- reformage au moyen de CO₂ et H₂O,
et avec une ou plusieurs conduite(s) d'introduction (5, 18) pour l'introduction d'au moins un flux de gaz du groupe
- fraction riche en hydrocarbure,
- flux de gaz obtenu dans l'ensemble pour l'exécution de l'oxydation avec de l'oxygène techniquement pur,
- flux de gaz obtenu dans l'ensemble pour l'exécution du reformage au moyen de CO₂ et de H₂O
dans l'ensemble de réduction (1, 25),
dans lequel ladite une ou lesdites plusieurs conduite(s) d'introduction (5, 18) débouche(nt) dans l'ensemble de réduction, et
avant l'embouchure d'au moins une des conduites d'introduction (5) dans l'ensemble de réduction, une conduite de gaz réducteur additionnel (7) pour l'alimentation de gaz réducteur additionnel à l'ensemble de réduction débouche dans cette conduite d'introduction.

8. Dispositif selon la revendication 7, **caractérisé en ce que** le dispositif (2, 28) pour la séparation de gaz de four à coke en une fraction riche en hydrogène et une fraction riche en hydrocarbure est un dispositif du groupe
- dispositif pour l'adsorption par inversion de pression (2),
- dispositif pour la séparation membranaire (28).

9. Dispositif selon la revendication 7 ou 8, **caractérisé en ce qu'**il se trouve un four à gaz (6) dans la conduite de gaz réducteur additionnel (7) avant l'embouchure de la conduite de gaz réducteur additionnel (7) dans la conduite d'introduction (5).

10. Dispositif selon l'une quelconque des revendications 7 à 9, **caractérisé en ce qu'**il se trouve x conduites d'introduction (5, 18), x étant supérieur ou égal à 2, parmi lesquelles, pour un maximum de x-1 conduites d'introduction (5), il se trouve qu'une conduite de gaz réducteur additionnel (7) pour l'alimentation de gaz réducteur additionnel à l'ensemble de réduction débouche dans cette conduite d'introduction (5) avant l'embouchure d'au moins une des conduites d'introduction (5) dans l'ensemble de réduction.

11. Dispositif selon l'une quelconque des revendications 7 à 10, **caractérisé en ce que** l'ensemble de réduction (1, 25) est une cuve de réduction (1).

12. Dispositif pour la mise en oeuvre d'un procédé selon l'une quelconque des revendications 7 à 11, **caractérisé en ce que** l'ensemble de réduction (1, 25) est une cascade de lits fluidisés (25).
